**Europäisches Patentamt**

**European Patent Office**

**Office européen des brevets**

(19)

(11) Veröffentlichungsnummer: **0 087 572**
**B1**

# EUROPÄISCHE PATENTSCHRIFT

(12)

(45) Veröffentlichungstag der Patentschrift:
23.07.86

(21) Anmeldenummer: **83100520.2**

(22) Anmeldetag: **21.01.83**

(51) Int. Cl.⁴: **B 62 D 33/04**

(54) **Ladebordwand mit einer kraftspeichernden Einrichtung.**

(30) Priorität: **22.02.82 DE 3206320**

(43) Veröffentlichungstag der Anmeldung:
**07.09.83 Patentblatt 83/36**

(45) Bekanntmachung des Hinweises auf die Patenterteilung:
**23.07.86 Patentblatt 86/30**

(84) Benannte Vertragsstaaten:
**BE CH DE FR LI NL**

(56) Entgegenhaltungen:
**DE-A-2 710 141**
**DE-U-7 312 685**
**DE-U-7 904 009**

(73) Patentinhaber: **Heinz Böse KG, Im Weissbruch 36,
D-5779 Eslohe 4 - Reiste (DE)**

(72) Erfinder: **Beule, Ulrich, Warenberger Strasse,
D-5790 Altenbüren (DE)**

(74) Vertreter: **Patentanwälte Schulze Horn und
Hoffmeister, Goldstrasse 36, D-4400 Münster (DE)**

EP 0 087 572 B1

## Beschreibung

Die Erfindung betrifft einen geschlossenen Aufbau für einen Lastkraftwagen oder Anhänger mit einer oder mehreren öffenbaren Bordwänden, die jeweils aus einem unteren und einem oberen Bordwandteil bestehen, von denen das untere Bordwandteil an seinem unteren Rand um eine horizontale Achse schwenkbar ist und das obere Bordwandteil an seinem unteren Ende durch an festen Aufbauteilen angelenkte Lenker und an seinem oberen Ende durch eine unter dem Dach angeordnete horizontale Führung geführt und mit dem unteren Bordwandteil durch einen am oberen Ende des oberen Bordwandteils angreifenden Seilzug derart verbunden ist, daß es bei einem Herabklappen des unteren Bordwandteils in eine Horizontallage unter dem Dach gezogen wird, wobei beidseitig des oberen Bordwandteils im mittleren Bereich von dessen oberer Hälfte je eine Stützrolle angebracht ist, gegen die die Innenfläche des oberen Bordwandteils mindestens im geschlossenen Zustand anliegt, und daß die Drehzapfen der Lenker in der Ebene der geschlossenen Bordwand liegen, und mit einer Feder, deren eines Ende an dem Fahrzeug befestigt ist und deren anderes Ende über ein Zugseil und eine Seilrolle auf das obere Bordwandteil einwirkt, und wobei die Feder im geöffneten Zustand der Bordwandteile vorgespannt ist.

Derartige Aufbauten sind bereits aus der DE-U-7 312 685 und durch die DE-A-27 10 141 bekannt. Aufbauten dieser Art haben sich gut bewährt und sind bereits weit verbreitet.

Nachteilig ist bei ihnen aber, daß zum Öffnen der Ladeordwände relativ viel Kraft aufgewendet werden muß. Durch Öffnungsverschwenkung des unteren Bordwandteils wird der obere Bordwandteil über einen auf seinen oberen Rand wirkenden Seilzug unter das Dach des Aufbaus gezogen. Eine Federbelastung der oberen Ladebordwand erfolgt auf dem ersten bzw. letzten Teil ihres Weges beim Zu- bzw. Aufschwenken entgegen der Schwenkrichtung. Die Bewegung des oberen Bordwandteils wird also nur beim Zuschwenken durch die Federkraft unterstützt.

Es ist daher Aufgabe der Erfindung einen geschlossenen Aufbau der eingangs genannten Art zu schaffen, bei welchem die Bewegung des oberen Bordwandteils in der ersten Phase des Zuschwenkens und des Aufschwenkens der Ladebordwände durch Federkraft unterstützt wird.

Diese Aufgabe wird erfindungsgemäß dadurch gelöst, daß das Zugseil an einem Befestigungspunkt an der Seitenfläche des oberen Bordwandteils im Abstand von dessen oberem und unterem Ende befestigt ist und daß die Seilrolle derart angeordnet ist, daß sich ihr der Befestigungspunkt im Verlauf der Schwenkbewegung des oberen Bordwandteils zunächst nähert und sich dann wieder von ihr entfernt, wodurch die Feder im geöffneten und im geschlossenen Zustand des oberen Bordwandteils maximal gespannt und im teilweise verschwenkten Zustand des oberen Bordwandteils weniger stark gespannt bzw. entspannt ist.

Um besonders zu Beginn des Einschwenkens eine große Kraft vom unteren Bordwandteil über den Seilzug auf das obere Bordwandteil zu übertragen, ist der erfindungsgemäße Aufbau vorteilhaft dadurch gekennzeichnet, daß der am oberen Ende des oberen Bordwandteils angreifende Seilzug über eine Umlenkrolle durch eine lose Rolle zu einem Befestigungspunkt am Fahrzeug geführt wird, wobei die Weiterführung des Seilzuges von der losen Rolle über Umlenkrollen zum Befestigungspunkt am unteren Bordwandteil reicht.

Die Vorteile des erfindungsgemäßen Aufbaus bestehen darin, daß die Öffnungs- und die Schließbewegung des oberen Bordwandteils besonders in der Anfangsphase durch eine in die gleiche Richtung wirkende Federkraft unterstützt wird. Durch die Gestaltung des Seilzuges mit einer losen Rolle erreicht man, daß das untere Bordwandteil durch eine günstigere Seilbefestigung eine größere Kraft auf das obere Bordwandteil ausübt. Die Bedienung des Aufbaus kann dadurch ohne großen Kraftaufwand erfolgen.

Im folgenden wird ein Ausführungsbeispiel der Erfindung anhand einer Zeichnung näher beschrieben. Es zeigt:

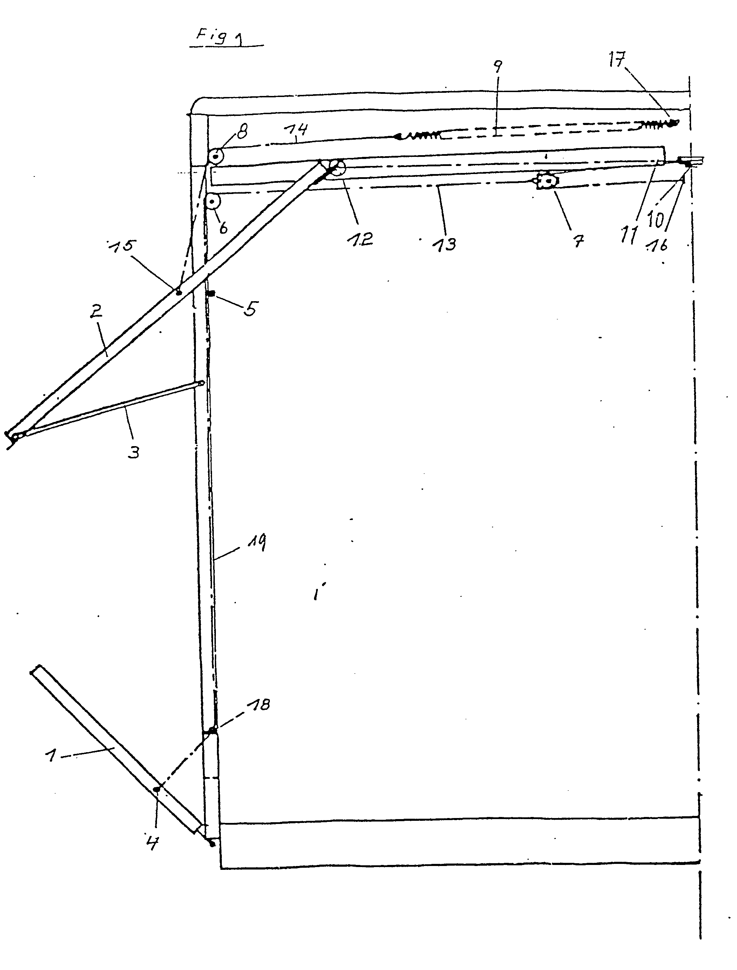

Figur 1 einen Schnitt durch den Aufbau im Bereich der Ladebordwand mit teilweise geöffneten Bordwandteilen.

Gemäß der Figur 1 besteht der erfindungsgemäße Aufbau für einen Lastkraftwagen oder einen Anhänger für solchen aus Wänden, von denen mindestens eine als Ladebordwand ausgebildet ist. In einer weiteren Ausgestaltung können aber entweder beide Längswände oder die Hinterwand und bei einem Anhänger auch die Vorderwand als Ladebordwand ausgestaltet sein.

Die an sich bekannte Ladebordwand besteht aus einem unteren und einem oberen Bordwandteil, wobei die untere Bordwand bzw. der untere Bordwandteil an der Unterkante mit dem Fahrzeugaufbau verschwenkbar verbunden ist und durch die Öffnungsverschwenkung des unteren Bordwandteils wird der obere Bordwandteil über einen auf seinen oberen Rand einwirkenden Seilzug unter das Dach des Aufbaus gezogen, wo er etwa Horizontallage einnimmt. Im einzelnen weist das bekannte obere Bordwandteil 2 an seinem oberen Rand einen Drehpunkt auf, welcher mittels Laufräder 12 in einer Führungsschiene 11 nach innen ziehbar ist und an dem freien Ende eines zwischen dem oberen und dem unteren Drehpunkt am Aufbau angelenkten Lenker 3 verbunden ist. Der zwischen der oberen Ladebordwand 1 und den Rungen 19 bzw. diesen entsprechenden Wandteilen frei verschwenkbare Lenker 3 weist beidseits je einen Drehzapfen auf, wobei der eine in ein Lager eingesetzt ist, welches innerhalb der Runge 19

angebracht ist, der andere in ein Drehzapfenlager eingreift, das in die Doppelwand der oberen Ladebordwand 2 an deren Unterrand mit seitlicher Öffnung eingesetzt ist.

Der obere Bordwandteil 2 selbst ist so ausgebildet, daß die Doppelwandung an ihrem oberen und unteren Rand je ein U-Profil mit aufgesetztem Steg besitzen, der einen Anschlag unten an der unteren Ladebordwand 2 und oben an einem längsverlaufenden Kastenprofil bildet. An dem Oberrand des oberen Bordwandteils 2 ist ferner beidseitig je eine Achse für das Laufrad 12 angebracht, welches außen von den Seitenwänden der Ladebordwand 2 angeordnet ist. Um eine symmetrische Lastverteilung zu erreichen, sind an den Achsen die Enden der Seilzüge 13 befestigt, sofern diese nicht mittig angebracht sind.

Im Gegensatz zu früheren Ausführungsformen ist der erfindungsgemäße Aufbau nun dadurch gekennzeichnet, daß in der Mitte, je nach Kraftverteilung aber auch unterhalb oder oberhalb der Mitte der Seitenfläche des oberen Bordwandteils 2 beidseitig ein Zugseil 14 befestigt ist, das vom Befestigungspunkt 15 über eine Umlenkrolle 8 zum Ende einer Feder 9 führt, deren anderes Ende am Fahrzeug befestigt ist.

Der Seilzug 13, der die Bewegung des unteren auf das obere Bordwandteil überträgt, ist mit seinem einen Ende am Oberrand des oberen Bordwandteils befestigt. Von hier wird er über eine Umlenkrolle 10 durch eine lose Rolle 7 zu einem Befestigungspunkt 16 am Fahrzeug geführt. Von der losen Rolle 7 aus wird der Seilzug aus der Horizontalen durch eine Umlenkrolle 6 nach unten umgelenkt und läuft in den Ringen 19 des Aufbaus über eine weitere Seilrolle 18 zum Befestigungspunkt 4 am unteren Bordwandteil 1. Dieser Befestigungspunkt ist von der Mitte in Richtung Drehpunkt des unteren Bordwandteils verschoben. Innerhalb der Runge 19 übernehmen die Seilrollen 6 und 18 die Führung des Seilzuges 13, wobei die Seilrolle 6 mit ihrem Umfang in einen Schlitz innerhalb der Runge 19 ragt. Die Rungen 19 bzw. funktionell entsprechende Teile der Wände weisen Schlitze zum Ein- oder Austritt des Seilzugs 13 auf, in denen ein Zusatzsteg zur Erhöhung der Festigkeit eingesetzt ist. An der Runge 3 ist etwa in 70 % der Höhe des oberen Bordwandteils 2 eine Verriegelungs- und Abrollrolle 5 angebracht, welche mit dem seitlichen Rand der oberen Ladebordwand 2 in Berührung steht und deren nach außen weisende Umfangsfläche im geschlossenen Zustand der oberen Ladebordwand 2 mit deren Innenflächen Kontakt hat.

Wirkung der Feder 9 bzw. losen Rolle 7 auf die Öffnungsund Schließbewegung der Ladebordwände:

Wie aus Figur 1 ersichtlich, ist das obere Bordwandteil über ein Zugseil 14 mit einer Feder 9 verbunden, deren anderes Ende am Fahrzeug befestigt ist.

Die Öffnungs- bzw. Schließbewegung des oberen Bordwandteils beeinflußt die Auslenkung der Feder 9 in der Weise, daß die Feder 9 bei geschlossener bzw. vollständig geöffneter Ladebordwand ihre größte Vorspannung besitzt. Dazwischen wird ein Zustand durchlaufen, in dem die Feder 9 entspannt ist.

Die Belastung des oberen Bordwandteils 2 durch die Feder 9 erfolgt auf dem ersten Bereich ihres Weges beim Aufschwenken und Zuschwenken und ist diesen Bewegungen gleichgerichtet. Der Krafteinsatz besonders zu Beginn des Öffnens und Schließens der Ladebordwand wird dadurch erheblich verringert.

Zur Verringerung der erforderlichen Hebelkraft beim Öffnen der Ladebordwand trägt ferner noch der Einbau einer losen Rolle 7 in die Seilzugführung bei. Bei Verkürzung des Seilzugweges um die Hälfte kann durch diese Maßnahme die einwirkende Kraft des unteren Bordwandteils 1 verdoppelt werden, indem man den Befestigungspunkt 4 des Seilzuges 13 von der Mitte des unteren Bordwandteils 1 in Richtung seines Drehpunktes verschiebt. Dies führt zu einem höheren Fallgewicht des unteren Bordwandteils 1, das nun die Öffnung der Ladebordwand durch die größere Hebelwirkung zusätzlich erleichtert.

Der Einbau der Feder und der losen Rolle in den an sich bekannten Aufbau erleichtert also erheblich das Öffnen und Schließen der Ladebordwände. Aufgrund der einfachen Ausführung und der damit verbundenen Vorteile kann von einer idealen Lösung der anstehenden Probleme gesprochen werden.

**Patentasprüche**

1. Geschlossener Aufbau für einen Lastkraftwagen oder Anhänger mit einer oder mehreren öffenbaren Bordwänden, die jeweils aus einem unteren und einem oberen Bordwandteil (1, 2) bestehen, von denen das untere Bordwandteil (1) an seinem unteren Rand um eine horizontale Achse schwenkbar ist und das obere Bordwandteil (2) an seinem unteren Ende durch an festen Aufbauteilen angelenkte Lenker (3) und an seinem oberen Ende durch eine unter dem Dach angeordnete horizontale Führung (11) geführt und mit dem unteren Bordwandteil (1) durch einen am oberen Ende des oberen Bordwandteils angreifenden Seilzug (13) derart verbunden ist, daß es bei einem Herabklappen des unteren Bordwandteils (1) in eine Horizontallage unter dem Dach gezogen wird, wobei beidseitig des oberen Bordwandteils (2) im mittleren Bereich von dessen oberer Hälfte je eine Stützrolle (5) angebracht ist, gegen die die Innenfläche des oberen Bordwandteils (2) mindestens im geschlossenen Zustand anliegt, und daß die Drehzapfen der Lenker (3) in der Ebene der geschlossenen Bordwand liegen, und mit einer Feder (9), deren eines Ende an dem Fahrzeug befestigt ist und deren anderes Ende über ein Zugseil (14) und eine Seilrolle (8) auf das obere Bordwandteil (2) einwirkt, und wobei die Feder (9) im geöffneten Zustand der Bordwandteile (1, 2) vorgespannt ist, dadurch gekennzeichnet, daß das Zugseil (14) an einem Befestigungspunkt (15) an der Seitenfläche des oberen Bordwandteils (2) im Abstand von dessen oberem und unterem Ende befestigt ist und daß die Seilrolle (8) derart angeordnet ist, daß sich ihr der Befestigungspunkt (15) im Verlauf der Schwenkbewegung des oberen Bordwandteils (2) zunächst nähert und sich dann wieder von ihr entfernt, wodurch die Feder (9) im geöffneten und im geschlossenen Zustand des oberen Bordwandteils (2) maximal gespannt und im teilweise verschwenkten Zustand des oberen Bordwandteils (2) weniger stark gespannt bzw. entspannt ist.

2. Geschlossener Aufbau nach Anspruch 1, dadurch gekennzeichnet, daß der am oberen Ende des oberen Bordwandteils (2) angreifende Seilzug (13) über eine Umlenkrolle (10) durch eine lose Rolle (7) zu einem Befestigungspunkt (16) am Fahrzeug geführt wird, wobei die Weiterführung des Seilzuges (13) von der losen Rolle (7) über Umlenkrollen (6, 18) zum Befestigungspunkt (4) am unteren Bordwandteil (1) reicht.

## Claims

1. A closed body for a truck (heavy goods vehicle) or trailer comprising one or more side boards adapted to be opened and each consisting of a lower and a upper side board portion (1, 2), the lower side board portion (1) having its lower edge pivotably mounted about a horizontal axis, and the upper side board portion (2) having its lower end guided by links (3) pivoted to stationary body sections, and having its upper end guided by horizontal guide means (11) positioned below the body ceiling and being connected to the lower side board portion (1) by a wire cable (13) engaged with the upper end of the upper side board portion such that the latter is drawn to a horizontal position under the body ceiling when the lower side board portion (1) is folded down, wherein one support roller (5) each is mounted on either sides of the upper side board portion (2) in the central region of the upper half thereof, with the inner surface of the upper side board portion (2) contacting said roller at least in its closed state, and wherein the pivot pins of the links (3) are disposed in the plane of the closed side board, and further comprising a spring (9) which has one end thereof attached to the vehicle while the opposite end thereof acts upon the upper side board portion (2) through a load cable (14) and a pulley (8), and wherein the spring (9) is pretensioned in the opened state of the side board portions (1, 2), characterized in that the load cable (14) is attached to a mounting point (15) on the side face of the upper side board portion (2) with a spacing from the upper and lower ends of said portion, and that the pulley (8) is positioned in such a manner that in the course of the pivoting motion of the upper side board portion (2) the mounting point (15) first approaches the pulley and then moves away therefrom, whereby the spring (9) is tensioned to the maximum degree in the opened and closed states of the upper side board portion (2), and is tensioned to a lesser degree or relieved, respectively, in the partially pivoted state of the upper side board portion (2).

2. The closed body according to claim 1, characterized in that the wire cable (13) being engaged with the upper end of the upper side board portion (2) is passed to a mounting point (16) on the vehicle by an idle or moving roller (7) via a guide roller (10), with the extension of the wire cable (13) from the idle roller (7) extending to the mounting point (4) on the lower side board portion (1) through guide rollers (6, 18).

## Revendications

1. Carrosserie couverte pour un véhicule automobile utilitaire ou une remorque, avec une ou plusieurs parois latérales pouvant être ouvertes, constituées chacune d'une partie inférieure et d'une partie supérieure (1, 2), la partie inférieure (1) étant apte à basculer, en son bord inférieur, autour d'un axe horizontal, et la partie supérieure (2) étant guidée, en son extrémité inférieure, par des bras oscillants (3) articulés sur des parties fixes de la carrosserie et, en son extrémité supérieure, par un guide horizontal (11) disposé en dessous du toit, et étant liée à la partie inférieure (1) par une transmission à câble (13) attaquant l'extremité superieure de la partie supérieure de telle manière que lorsque la partie inférieure (1) est basculée vers le bas, à une position d'ouverture pour laquelle elle est horizontale, ladite partie superieure soit tirée à une position horizontale, en dessous du toit, des galets d'appui (5) étant agencés, à raison de un de chaque côté de la partie supérieure (2) de la paroi, dans la région médiane de sa moitié supérieure, la surface intérieure de la partie supérieure (2) venant s'appliquer contre ces galets d'appui (5) au moins en position de fermeture, et en ce que les tourillons des bras oscillants (3) se trouvent dans le plan de la paroi latérale fermée, la carrosserie comportant un ressort (9) dont une première extrémité est fixée au véhicule et dont l'autre extrémité agit sur la partie supérieure (2) par l'intermédiaire d'un câble de traction (14) et d'une poulie à câble (8), le ressort (9) étant contraint lorsque les parties de paroi (1, 2) sont en position d'ouverture, caractérisée en ce que le câble de traction (14) est fixé à un point (15) de fixation situe sur la surface latérale de la partie supérieure (2), à distance des extrémités supérieure et inférieure de celle-ci, et en ce que la poulie à câble (8) est agencée de manière que le point de fixation (15) s'en rapproche d'abord puis s'en éloigne au cours du mouvement de basculement de la partie supérieure (2), ce qui a pour effet que le ressort (9) est à sa contrainte maximale lorsque la partie supérieure (2) de la paroi est en position d'ouverture et lorsqu'elle est en position de fermeture, ce ressort étant moins fortement contraint, ou étant détendu, lorsque la partie supérieure (2) est en condition de basculement partiel.

2. Carrosserie selon la revendication 1, caractérisée en ce que la transmission à câble (13) attaquant l'extrémité supérieure de la partie supérieure (2) de la paroi est amenée, en passant sur une poulie de changement de direction (10), et par l'intermédiaire d'une poulie libre, à un point (16) de fixation au véhicule, cette transmission à câble (13) allant de cette poulie libre (7) au point (4) de fixation à la partie inférieure (1) de la paroi en passant par des poulies de changement de direction (6, 18).

Fig 1